**Europäisches Patentamt**

(19) **European Patent Office**

**Office européen des brevets**

(11) Numéro de publication: **0 097 594**
**B1**

(12) **FASCICULE DE BREVET EUROPEEN**

(45) Date de publication du fascicule du brevet:
**22.04.87**

(51) Int. Cl.⁴: **F 16 D 25/12,** F 16 D 25/08,
F 16 D 25/14

(21) Numéro de dépôt: **83401274.2**

(22) Date de dépôt: **20.06.83**

---

(54) **Système de commande pour embrayage d'un véhicule automobile.**

---

(30) Priorité: **21.06.82 IT 2195682**

(43) Date de publication de la demande:
**04.01.84 Bulletin 84/1**

(45) Mention de la délivrance du brevet:
**22.04.87 Bulletin 87/17**

(84) Etats contractants désignés:
**DE FR GB IT SE**

(56) Documents cités:
**FR - A - 1 279 933**
**FR - A - 1 529 128**
**FR - A - 2 056 958**
**FR - A - 2 300 921**
**GB - A - 840 261**

(73) Titulaire: **BENDIX ITALIA S.p.A., Via Cavalli 53 A Casella Postale 66, I-26013 Crema (IT)**

(72) Inventeur: **Cadeddu, Leonardo, Via Piacenza 29, Crema (IT)**

(74) Mandataire: **Poidatz, Emmanuel et al, Service Brevets Bendix 44 rue François 1er, F-75008 Paris (FR)**

---

ACTORUM AG

## Description

La présente invention concerne un système de commande pour embrayage d'un véhicule automobile. En particulier, on connaît des systèmes de ce type qui comprennent un servomoteur à dépression commandé par la pédale d'accélérateur, notamment du document FR-A 2 056 958.

Un système analogue et notablement simplifié est décrit dans la demande de brevet italien 21958A/82 déposé le 21 juin 1982 au nom de Franco Ravasio pour un système de commande pour embrayage d'un véhicule automatique. Ce système comprend une valve de distribution dont le tiroir est commandé par la pédale d'accélérateur, cette valve comportant deux orifices de sortie reliés tous deux à l'une des chambres du servomoteur, l'une des liaisons comportant un clapet commandé en fonction de la position du piston du servomoteur. Comme indiqué dans ce document, le siège de ce clapet est réglable en position de manière à faire coïncider la position de fermeture du clapet avec la position du glissement de l'embrayage. Au fur et à mesure de l'usure de l'embrayage, il y a lieu de modifier en conséquence la position du siège de clapet pour maintenir cette coïncidence.

L'invention a donc pour but de supprimer cette intervention. Pour ce faire, l'invention concerne un système de commande pour embrayage d'un véhicule automobile, du type comprenant un servomoteur à dépression comprenant un boîtier divisé en deux chambres par un piston de servomoteur, ce dernier étant relié mécaniquement à l'organe d'entrée de l'embrayage, une valve de distribution commandée par l'accélérateur du véhicule comportant un premier orifice d'entrée relié à une source de dépression, un second orifice d'entrée relié à l'atmosphère, un premier et un second orifices de sortie reliés à l'une des chambres du servomoteur, l'autre chambre étant reliée à l'atmosphère, et un clapet interposé dans la liaison entre le premier orifice de sortie et ladite chambre, ce clapet étant commandé en fonction de la position du piston du servomoteur, caractérisé en ce que ledit clapet a son siège défini sur un insert monté à friction dans un guide et ledit insert étant relié audit piston de servomoteur par une liaison unidirectionnelle à course morte.

Un mode de réalisation de l'invention sera maintenant décrit en se référant aux trois figures annexées, qui sont des représentations schématiques d'un système de commande pour embrayage d'un véhicule automobile, dans trois positions de fonctionnement différentes.

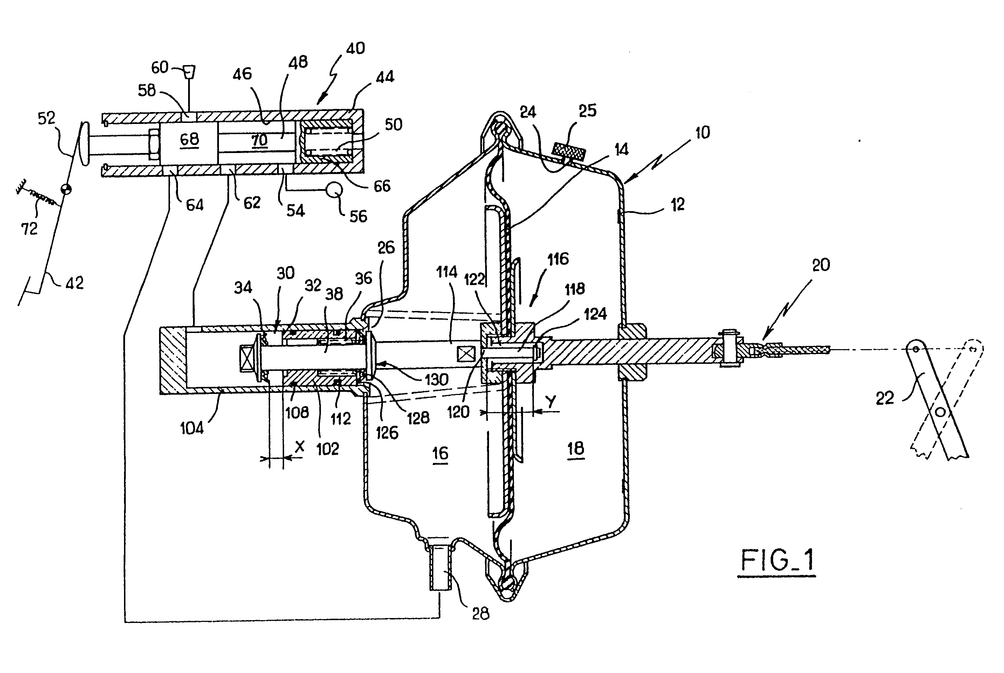

Le système représenté schématiquement à la figure 1 comprend un servomoteur (10) composé d'un boîtier (12) dans lequel est monté mobile un piston (14) qui divise le boîtier en deux chambres (16) et (18). Le piston (14) est relié mécaniquement, par exemple par une liaison à câble (20), à un organe d'entrée (22) de l'embrayage du véhicule (non représenté). De manière connue en soi, un ressort de rappel interne à l'embrayage rappelle l'organe d'entrée dans une position de repos telle que représentée en pointillé à la figure 1.

La chambre 18 comporte un orifice 24 ouvert en permanence à l'atmosphère de préférence via un filtre 25. La chambre 16 comporte deux orifices 25 et 28. Dans le premier de ces deux orifices 26 est monté un clapet 30 commandé en fonction de la position du piston 14 et constitué essentiellement de la manière suivante: un siège de clapet 32 est défini au voisinage de l'orifice 26 du côté de la chambre 16, et un opercule 34 est sollicité par un ressort 36 en direction du siège 32, l'opercule 34 porte une tige 38 qui traverse le siège 32 et se projette dans la chambre 16 en direction du piston 14. Ainsi, selon la position du piston 14 dans le boîtier 12, le clapet 30 sera en position ouverte ou fermée. Le reste de la structure du clapet 30 sera décrit plus en détail ultérieurement.

Le système de commande comprend également une valve de distribution 40 commandée par la pédale d'accélérateur 42 du véhicule.

La valve 30 comporte un boîtier 44 pourvu d'un alésage 46 dans lequel noulisse un tiroir 48 rappelé par un ressort 50 au contact d'une extension 52 de la pédale 42.

Dans l'alésage 46 débouchent quatre orifices:

– un premier orifice d'entrée 54 relié à une source de dépression 56, constituée par exemple par le collecteur d'admission du moteur du véhicule;
– un second orifice d'entrée 58 relié à l'atmosphère, de préférence via un filtre 60;
– un premier orifice de sortie 62 relié au clapet 30; et
– un second orifice de sortie 64 relié à l'orifice 28 du servomoteur 10.

Le tiroir comporte deux portées 66 et 68 séparées par un rétrécissement 70 qui coopèrent avec les orifices 54, 58, 62 et 64 comme il sera vu ci-après.

Enfin, de manière classique la pédale 42 est rappelée dans sa position de repos, telle que représentée, par un ressort 72 dont la force est telle que le tiroir 48 est déplacé à l'encontre du ressort 50 dans une première position dans laquelle il y a communication entre le premier orifice d'entrée 54 et le premier orifice de sortie 62 et où les deux autres orifices 58, 64 sont bloqués.

Dans cette situation, la chambre 16 du servomoteur est mise en communication avec la source de dépression 56 et le piston 14 est déplacé vers la gauche si l'on considère la figure, en entraînant l'organe d'entrée 22 de l'embrayage dans la position représentée pour laquelle se produit le débrayage, et le conducteur du véhicule peut alors effectuer tout changement de vitesse à l'aide du levier (non représenté) prévu à cet effet.

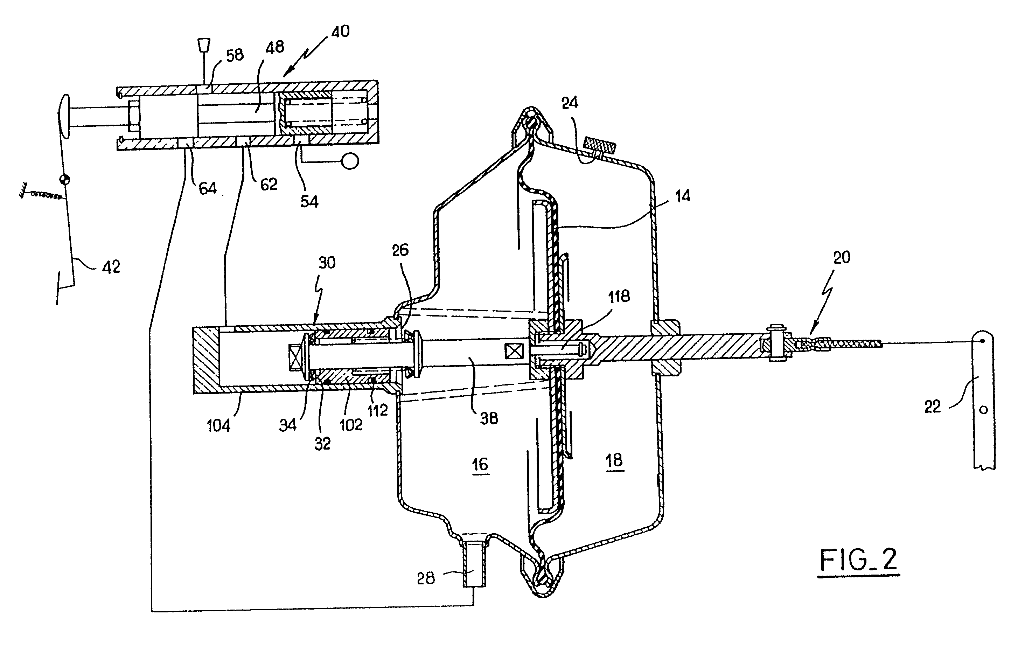

Lorsque le conducteur commence à appuyer sur la pédale d'accélérateur, en un premier temps le tiroir 48 se déplace vers la gauche jusqu'à occuper une seconde position pour laquelle le premier orifice d'entrée 54 est bloqué et il y a communication entre le second orifice d'entrée 58 et le premier orifice de sortie 62, comme représenté à la figure 2.

Dans cette situation, la chambre 16 est mise en communication avec l'atmosphère et le piston 14 se déplace vers la droite, en considérant la figure, sous l'influence du ressort interne de l'embrayage.

Lorsque le piston 14 a atteint une position prédéterminée, l'opercule 34 du clapet 30 vient au contact du siège 32 et la liaison entre la chambre 16 et l'atmosphère est interrompue. Le piston 14 demeure alors dans cette position. Comme il sera vu ci-après, cette position coïncide en toutes circonstances d'entrée 22 de l'embrayage pour laquelle se produit le glissement de l'embrayage.

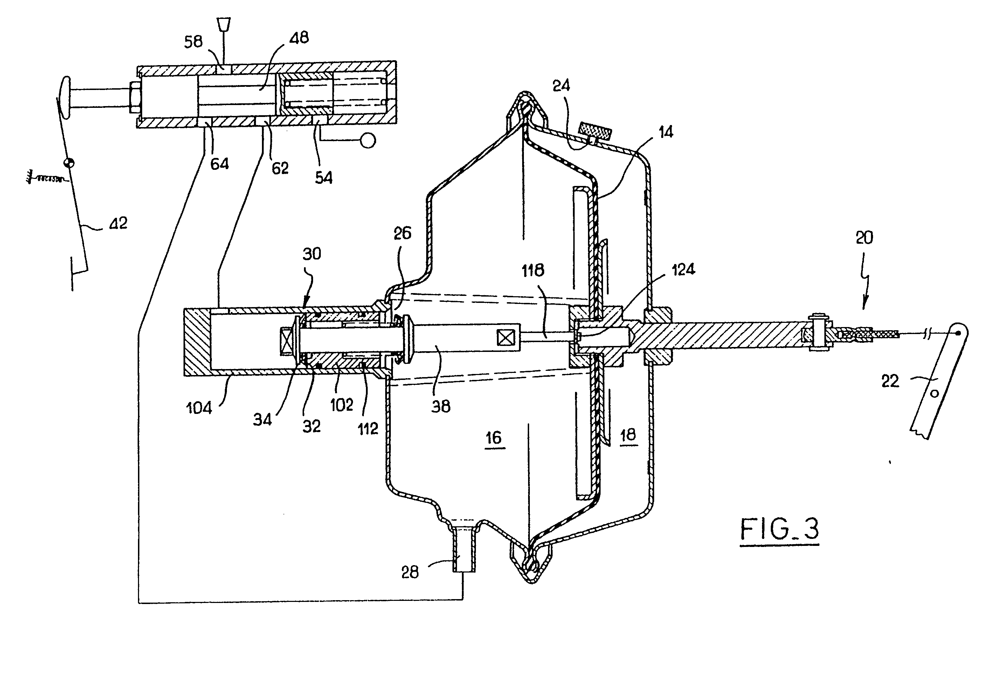

En un second temps, lorsque le conducteur poursuit l'enfoncement de la pédale 42, le tiroir 48 se déplace à nouveau vers la gauche et vient occuper une troisième position dans laquelle le tiroir 48 établit une communication entre le second orifice d'entrée 58 et le second orifice de sortie 64, comme représenté à la figure 3.

Dans cette situation, la chambre 16 est reliée directement à l'atmosphère via l'orifice 28, et le piston 14 est alors totalement ramené vers la droite jusque dans la position de repos de l'organe de commande 22 de l'embrayage et qui correspond à l'engagement complet de celuici.

Si l'on considère à nouveau la figure 1, on note que le siège de clapet 32 est défini sur un insert 102 en forme de fourreau, monté à friction dans un guide tubulaire 104 de la manière suivante: le fourreau 102 comporte deux gorges périphériques, la première abritant un joint d'étancheité 108 et la seconde abritant un jonc 112 monté à force dans le guide tabulaire 104.

A l'extrémité opposée 114 de la tige 38 qui se projette vers le piston 14 est prévu une liaison unidirectionnelle à course morte 116, de la manière suivante: la tige 38 comporte une projection 118 qui s'étend au travers d'un orifice 120 dans une cavité 112 du piston 14 et la projection 118 comporte une tete évasée 124, de dimension supérieure à l'orifice 120.

Enfin, un second siège de clapet 126 est défini sur l'insert 102 du côté de la chambre 16 et un second opercule de clapet 128 est monté sur la tige 38 pour définir un second clapet 130.

Dans la situation illustrée à la figure 1, la mise sous dépression de la chambre 16 provoque le déplacement du piston 14 vers la gauche et le débrayage du véhicule; cependant, le piston 14 est limité dans sa course parce que lorsque le second opercule 128 vient atteindre le siège 126, il y a fermeture de la liaison entre la chambre 16 et la source de dépression. On évite ainsi d'imprimer des efforts excessifs au mécanisme de liaison à l'organe d'entrée 22 de l'embrayage, grâce au clapet 130.

Durant la première phase de l'enfoncement de la pédale d'accélérateur (Figure 2), l'air est introduit dans la chambre 16 via la valve 40 et le clapet 30; le piston 14 se déplace alors vers la droite, la tige 38 se déplaçant conjointement avec le piston.

Après une course X, l'opercule 34 vient au contact du siège 32 et le piston 14 s'immobilise dans la position illustrée, l'organe 22 ayant alors atteint la position pour laquelle se produit le glissement de l'embrayage.

Durant la seconde phase de l'enfoncement de l'accélérateur (Figure 3), l'air est introduit directement dans la chambre 16 via la valve 40 et l'orifice 28. Le piston se déplace vers la droite jusque dans la position correspondant au plein engagement de l'embrayage.

La course du piston Y correspond à la longueur libre de la projection 118 de la tige 38.

Au fur et à mesure de l'usure de l'embrayage, la position finale du piston 14 se déplace progressivement vers la droite de la figure. Il en est naturellement de même pour la position de glissement.

Grâce à l'invention, la position de l'insert 102 pourra être constamment et automatiquement ajustée pour que la position du piston 14 correspondant à la fermeture du clapet 30 coïncide en toutes circonstances avec la position de glissement de l'embrayage.

En effet, lorsque la position finale du piston 14 se déplace vers la droite, le piston exerce une traction sur la tige 38 par l'intermédiaire de la tête 124 de sa projection 118, traction qui est transmise par l'opercule 34 à l'insert 102. Cette traction étant supérieure à la force de friction entre le jonc 114 et le guide 104, l'insert se déplace donc vers la droite pour atteindre une nouvelle position conforme à l'état d'usure de l'embrayage.

Lorsqu'on procède au remplacement des garnitures de friction de l'embrayage, il y a lieu de repousser l'insert 102 vers le fond du guide 104. Ceci peut se faire simplement en repoussant le piston 14 et la tige 38 de l'extérieur grâce au mécanisme 20.

Dès la première action sur la pédale 42, l'insert sera ramené automatiquement dans la position correspondant au glissement de l'embrayage.

**Revendications**

1. Système de commande pour embrayage d'un véhicule automobile, du type comprenant un servomoteur (10) à dépression comprenant un boîtier (12) divisé en deux chambres (16, 18) par un piston de servomoteur (14), ce dernier étant relié mécaniquement à l'organe d'entrée (22) de l'embrayage, une valve de distribution (40) commandée par l'accélérateur (42) du véhicule comportant un premier orifice d'entrée (54) relié à une source de dépression (56), un second orifice d'entrée (58) relié à l'atmosphère, un premier et un second orifices de sortie (62, 64) reliés à l'une des chambres (16) du servomoteur, l'autre chambre (18) étant reliée à l'atmosphère, et un clapet (30) interposé dans la liaison entre le premier orifice de sortie (62) et ladite chambre (16), ce clapet (30) étant commandé en fonction de la position du piston (14) du servomoteur (10), caractérisé en ce que ledit clapet (30) a son siège (32) défini sur un insert (102) monté à friction dans un guide (104) et ledit insert (102) étant relié audit piston de servomoteur (14) par une liaison unidirectionnelle à course morte (116).

2. Système de commande selon la revendication 1, caractérisé en ce que ledit insert (102) a la forme d'un fourreau monté coulissant dans ledit guide (104), ce dernier ayant une forme tubulaire, ledit fourreau comportant une gorge périphérique dans laquelle est reçu un jonc (112) monté à force dans ledit guide (104).

3. Système de commande selon la revendication 1 ou la revendication 2, caractérisé en ce que ledit clapet (30) comporte un opercule (34) sollicité élastiquement en direction dudit siège (32) et portant une tige (38) qui traverse ledit siège (32) et se projette en direction dudit piston (14), ladite tige (38) comportant une projection (118) pénétrant par une ouverture (120) dans une cavité (122) dudit piston et ladite projection (118) comportant une tête épanouie (124) dans ladite cavité (122), pour constituer ladite liaison unidirectionnelle à course morte (116).

4. Système de commande selon la revendication 3, caractérisé en ce qu'il comporte un second clapet (130) dont le siège (126) est défini sur ledit insert (102) à l'opposé du premier siège (32) et dont l'opercule (128) est porté par ladite tige (38) du côté de ladite chambre (16) du servomoteur (10).

## Patentansprüche

1. Steueranlage für eine Kraftfahrzeug-Kupplung, mit einem Unterdruck-Servomotor (10), der ein Gehäuse (12) aufweist, das von einem Servomotor-Kolben (14) in zwei Kammern (16, 18) unterteilt wird, wobei der Kolben mit dem Eingangsglied (22) der Kupplung mechanisch verbunden ist, einem von dem Fahrzeug-Gaspedal (42) gesteuerten Verteilerventil (40) mit einer ersten Einlassöffnung (54), die an einer Unterdruckquelle (56) angeschlossen ist, einer zweiten Einlassöffnung (58), die mit der Atmosphäre verbunden ist, einer ersten und einer zweiten Auslassöffnung (62, 64), die mit einer der Kammern (16) des Servomotors verbunden sind, wobei die andere Kammer (18) mit der Atmosphäre verbunden ist, und einem Ventil (30) in der Verbindung zwischen der ersten Auslassöffnung (62) und der besagten Kammer (16), wobei das Ventil (30) in Abhängigkeit von der Stellung des Kolbens (14) des Servomotors (10) gesteuert wird, dadurch gekennzeichnet, dass der Sitz (32) des Ventils (30) an einem Einsatz (102) gebildet ist, der unter Reibung in einer Führung (104) gelagert ist, wobei der Einsatz (102) mit dem Servomotor-Kolben (14) durch eine nur in einer Richtung wirksame Totgangverbindung (116) verbunden ist.

2. Steueranlage nach Anspruch 1, dadurch gekennzeichnet, dass der Einsatz (102) die Form einer Hülse hat, die in der Führung (104) gleitend gelagert ist, wobei die Führung rohrförmig ausgebildet ist und die Hülse eine Umfangsnut aufweist, in der ein Dichtring (112) sitzt, der in die Führung (104) eingepresst ist.

3. Steueranlage nach Anspruch 1 oder 2, dadurch gekennzeichnet, dass das Ventil (30) einen Schliesskörper (34) aufweist, der in Richtung des Ventilsitzes (32) elastisch vorgespannt ist und eine Stange (38) trägt, die sich durch den Ventilsitz (32) hindurcherstreckt und in Richtung des Kolbens (14) vorsteht, wobei die Stange (38) einen Vorsprung (118) aufweist, der durch eine Öffnung (120) in einen Hohlraum (122) des Kolbens eindringt und der Vorsprung (118) einen erweiterten Kopf (124) in dem Hohlraum (122) aufweist, um die nur in einer Richtung wirksame Totgangverbindung (116) zu bilden.

4. Steueranlage nach Anspruch 3, dadurch gekennzeichnet, dass sie ein zweites Ventil (130) aufweist, dessen Ventilsitz (126) an dem Einsatz (102) entgegengesetzt zu dem ersten Ventilsitz (32) gebildet ist und dessen Schliesskörper (128) von der Stange (38) auf der Seite der besagten Kammer (16) des Servomotors (10) getragen wird.

## Claims

1. Control system for an automotive vehicle clutch, of the type comprising a vacuum servomotor (10) comprising a casing (12) divided into a pair of chambers (16, 18) by a servomotor piston (14), the latter being mechanically connected to the input member (22) of the clutch, a distribution valve (40) controlled by the accelerator (42) of the vehicle comprising a first inlet orifice (54) connected to a vacuum source (56), a second inlet orifice (58) connected to atmosphere, first and second outlet orifices (62, 64) connected to one of the chambers (16) of the servomotor, the other chamber (18) being connected to atmosphere and a valve (30) interposed in the connection between the first outlet orifice (62) and said chamber (16), the valve (30) being controlled in response to the position of the piston (14) of the servomotor (10), characterized in that said valve (30) has its seat (32) defined on an insert (102) frictionally mounted in a guide (104), said insert (102) being connected to said servomotor piston (14) by a unidirectional lost-motion connection (116).

2. Control system according to claim 1, characterized in that said insert (102) is in the shape of a sleeve slidingly mounted in said guide (104), the latter being of tubular form, said sleeve comprising a peripheral groove receiving a sealing ring (112) forceably mounted in said guide (104).

3. Control system according to claim 1 or claim 2, characterized in that said valve (30) comprises a valve member (34) resiliently biased towards said seat (32) and carrying a rod (38) which traverses said seat (32) and projects towards said piston (14), said rod (38) comprising a projection (118) extending through an opening (120) into a cavity (122) of said piston, said projection (118) comprising an enlarged head (124) in said cavity (122) for forming said unidirectional lost-motion in connection (116).

4. Control system according to claim 3, characterized in that it comprises a second valve (130), the seat (126) of which is defined on said insert (102) opposite to the first seat (32) and having a valve member (128) supported by said rod (38) on the side of said chamber (16) of the servomotor (10).

FIG_1

0 097 594

FIG_2

FIG_3